# EUROPÄISCHE PATENTSCHRIFT

(11) **EP 4 261 638 B1**
(45) Veröffentlichungstag und Bekanntmachung des Hinweises auf die Patenterteilung: **19.11.2025**
(21) Anmeldenummer: 23192943.1
(22) Anmeldetag: 30.11.2021
(51) Int. Cl.: B65G 54/02, G05B 19/418

(54) **TRANSPORTEINRICHTUNG IN FORM EINES LANGSTATORLINEARMOTORS**
TRANSPORT DEVICE IN THE FORM OF A LONG STATOR LINEAR MOTOR
DISPOSITIF DE TRANSPORT SOUS FORME D'UN MOTEUR LINÉAIRE À STATOR LONG

(30) Priorität: 01.12.2020 AT 510472020
(43) Veröffentlichungstag der Anmeldung: 18.10.2023
(62) Teilanmeldung aus: 21823818.6
(73) Patentinhaber: ABB Schweiz AG, 5400 Baden (CH)
(72) Erfinder: Wagner, Philipp, 5142 Eggelsberg (AT); Haudum, Martin, 5142 Eggelsberg (AT); Weißbacher, Joachim, 5142 Eggelsberg (AT)
(74) Vertreter: Patentanwälte Pinter & Weiss OG

(56) Entgegenhaltungen:
- EP-A1- 3 251 985
- EP-A1- 3 575 250
- DE-A1- 102012 025 326
- US-A1- 2019 097 514

## Beschreibung

Die gegenständliche Erfindung betrifft ein Verfahren zur Inbetriebnahme einer Transporteinrichtung in Form eines Langstatorlinearmotors mit einer Vielzahl von Antriebsspulen, die an einem Stator angeordnet sind, und einer Vielzahl von Transporteinheiten, die im Betrieb gleichzeitig entlang des Stators bewegt werden, wobei eine Transporteinheit zum Befördern eines Produktes dient und mit der Transporteinrichtung ein vorgegebener Produktfluss realisiert wird, indem anhand von vorgegebenen Regeln für die Bewegungen der Transporteinheiten während des Betriebs der Transporteinrichtung Bewegungsprofile der Bewegungen der Transporteinheiten entlang des Stators zur Realisierung des Produktflusses erstellt werden.

Bei einem Linearmotor ist ein Primärteil (Stator) vorgesehen und ein Sekundärteil (Läufer), der relativ zum Primärteil bewegbar angeordnet ist. Am Primärteil sind Antriebsspulen angeordnet und am Sekundärteil Antriebsmagnete, oder umgekehrt. Die Antriebsmagnete sind entweder als Permanentmagnete, elektrische Spulen oder Kurzschlusswicklungen ausgeführt. Die Antriebsspulen sind elektrische Spulen, die zur Erzeugung eines elektromagnetischen Feldes durch Anlegen einer Spulenspannung bestromt werden. Durch das Zusammenwirken der (elektro)magnetischen Felder der Antriebsmagnete und der Antriebsspulen wirken Kräfte auf den Sekundärteil, die den Sekundärteil relativ zum Primärteil bewegen. Der Linearmotor kann beispielsweise als Synchronmaschine oder als Asynchronmaschine ausgeführt sein. Die Antriebsspulen des Linearmotors sind entweder entlang einer Bewegungsrichtung angeordnet oder in einer Bewegungsebene. Der Sekundärteil kann entlang dieser einen Bewegungsrichtung bewegt werden oder frei in der Bewegungsebene in den zwei Bewegungsrichtungen. Man kann auch zwischen Kurzstatorlinearmotoren und Langstatorlinearmotoren unterscheiden, wobei beim Langstatorlinearmotor der Sekundärteil kürzer oder kleiner als der Primärteil ist und beim Kurzstatorlinearmotor der Primärteil kürzer oder kleiner als der Sekundärteil ist.

Die Erfindung betrifft Langstatorlinearmotoren, worunter ausdrücklich lineare Langstatorlinearmotoren (mit Bewegung in einer Bewegungsrichtung), als auch planare Langstatorlinearmotoren (mit Bewegung in einer Bewegungsebene, häufig auch Planarmotor genannt) verstanden werden. Bei Langstatorlinearmotoren werden üblicherweise mehrere Sekundärteile gleichzeitig und unabhängig voneinander entlang des Primärteiles (in einer Bewegungsrichtung oder in einer Bewegungsebene) bewegt. Langstatorlinearmotoren werden daher oftmals in elektromagnetischen Transportsystemen eingesetzt, bei denen mehrere Transporteinheiten (Sekundärteile) zur Durchführung von Transportaufgaben gleichzeitig bewegt werden.

Aus dem Stand der Technik sind Langstatorlinearmotoren bekannt. In einem Langstatorlinearmotor sind Antriebsspulen in Bewegungsrichtung hintereinander oder in einer Bewegungsebene nebeneinander entlang einer Stützkonstruktion angeordnet. Die an der Stützkonstruktion angeordneten Antriebsspulen bilden den sich über den Bewegungspfad erstreckenden Stator des Langstatorlinearmotors. An einem Läufer sind Antriebsmagnete, entweder Permanentmagnete oder Elektromagnete, angeordnet, die ein magnetisches Erregungsfeld erzeugen. Der Läufer fungiert in einer Transporteinrichtung als Transporteinheit zum Bewegen eines Gegenstandes. Werden die Antriebsspulen in Bereich eines Läufers bestromt, so wird ein elektromagnetisches Antriebsmagnetfeld erzeugt, das mit dem Erregungsfeld der Antriebsmagnete zur Erzeugung einer Antriebskraft auf den Läufer zusammenwirkt. Durch Steuern der Bestromung der Antriebsspulen kann ein bewegtes Antriebsmagnetfeld erzeugt werden, womit der Läufer in Bewegungsrichtung oder in der Bewegungsebene des Langstatorlinearmotors bewegbar ist. Der Vorteil ist, dass gleichzeitig eine Vielzahl von Läufern unabhängig voneinander auf dem Stator bewegt werden können. In diesem Zusammenhang ist es auch bereits bekannt, einen Langstatorlinearmotor mittels Statormodule modular aufzubauen. Dabei werden an einem Statormodul eine bestimmte Anzahl von Antriebsspulen angeordnet. Einzelne Statormodule werden dann zu einem Stator der gewünschten Länge und/oder Form zusammengefügt. Beispielsweise zeigt die WO 2015/042409 A1 einen derartigen modular aufgebauten linearen Langstatorlinearmotor. Die US 9,202,719 B1 zeigt einen Langstatorlinearmotor in Form eines Planarmotors mit Statormodulen.

Durch das Bestromen der Antriebsspulen durch Anlegen einer Spulenspannung wird in Statormodulen auch Wärme erzeugt, wodurch die Temperatur eines Statormoduls ansteigen kann. Es ist daher auch schon bekannt, den Stator eines Linearmotors zu kühlen. Beispielsweise zeigt die US 5,783,877 A oder die US 7,282,821 B2 eine Kühlung eines Stators eines Linearmotors, wobei im Stator oder in einem am Stator anliegenden Bauteil Leitungen angeordnet sind, durch das ein Kühlmittel durchgeführt wird. Das Kühlmittel nimmt damit Wärme aus dem Stator auf und führt diese ab.

Die Kühlung des Stators eines Langstatorlinearmotors, der sich über eine große Länge erstrecken kann, ist hingegen konstruktiv aufwendig und erhöht auch die Kosten, insbesondere bei großen Statorlängen wie bei Verwendung als Transporteinrichtung.

Auch ein Stator eines Planarmotors muss üblicherweise gekühlt werden, insbesondere auch deshalb, weil bei einem Planarmotor eine Transporteinheit durch elektromagnetische Kräfte in Schwebe über dem Stator gehalten wird, was durch entsprechende Bestromung der Antriebsspulen erfolgt. Mit den Antriebsspulen müssen damit nicht nur die Antriebskräfte zum Bewegen der Transporteinheiten erzeugt werden, sondern auch die Schwebekräfte. Ein Beispiel für eine Kühlung des Stators eines Planarmotors kann der DE 10 2017 131 324 A1 entnommen werden.

Zum Bestromen der Antriebsspulen ist eine Leistungselektronik vorgesehen, die die benötigten elektrischen Stellgrößen der Antriebsspulen, beispielsweise eine Spulenspannung, ein Spulenstrom oder ein magnetischer Fluss, umsetzt. In der Leistungselektronik sind elektrische Bauteile verbaut, die im Betrieb belastet werden, beispielsweise durch diese durchfließenden elektrischen Ströme. Die zulässigen elektrischen Ströme sind aber durch die Bauteile und/oder die elektrische Konfiguration der Leistungselektronik beschränkt.

Während der Bewegung einer Transporteinheit entlang des Stators wirken aufgrund der Kinematik der Bewegung (Position, Geschwindigkeit, Beschleunigung, Ruck (zeitliche Ableitung der Beschleunigung), Stoß (zweifache zeitliche Ableitung der Beschleunigung) über Zeit) auch Kräfte und Momente auf die Transporteinheit. Diese Kräfte werden auch durch die Beladung der Transporteinheit (Masse und Position des zu befördernden Gegenstandes) beeinflusst. Es wirken auch Antriebskräfte, die zum Bewegen der Transporteinheit dienen, beispielsweise entlang der Bewegungsrichtung und quer dazu oder entlang einer Bahn in einer Bewegungsebene oder normal dazu. Bei einem Planarmotor wird mit den Antriebsspulen auch eine auf die Transporteinheit wirkende Schwebekraft erzeugt, die eine Transporteinheit über der Bewegungsebene magnetisch schweben lässt. Es können, insbesondere bei einem linearen Langstatorlinearmotor, auf die Transporteinheit auch Kräfte und Momente wirken, die von der mechanischen Führung der Transporteinheit aufgenommen werden müssen, um zu verhindern, dass die Transporteinheit während der Bewegung von der Transportstrecke fliegt. Beispielsweise wirken in einer Kurve Zentrifugalkräfte auf die Transporteinheit, die versuchen, die Transporteinheit von der Transportstrecke abzuheben. Bei einer Bewegung der Transporteinheit in einer Bewegungsebene, können aufgrund der Beladung beispielsweise Kippmomente wirken, die versuchen, die Transporteinheit von der Transportstrecke abzuheben. Ebenso können bei einem Planarmotor im Bereich einer gewölbten Bewegungseben Fliehkräfte wirken. Auf eine Transporteinheit können auch externe Kräfte wirken, beispielsweise Prozesskräfte in einer Bearbeitungsstation zur Bearbeitung eines mit der Transporteinheit beförderten Produktes.

EP 3 575 250 A1 zeigt, dass ein Bewegungsprofil einer Transporteinheit anhand eines vorgegebenen Relativbewegungsprofils eines Referenzpunktes der Transporteinheit festgelegt werden kann, sodass Bewegungsgrenzwerte oder Kraftgrenzwerte der Transporteinheit eingehalten werden. Das erfordert, dass die Relativbewegungsprofile der Transporteinheiten vorab bekannt sind.

Die Führung der Transporteinheit entlang der Transportstrecke kann mechanisch sein, beispielsweise durch zusammenwirkende mechanische Führungsteile auf der Transporteinheit und der Transportstrecke (wie Rollen, Gleitflächen, Kugeln usw.), kann aber auch magnetisch sein, beispielsweise aufgrund der Antriebsmagnete an der Transporteinheit, die mit magnetischen Teilen der Führungskonstruktion zusammenwirken. Auch eine Kombination solcher Führungen ist denkbar. Üblicherweise ist die Führung bei einem linearen Langstatorlinearmotor mechanisch und magnetisch. Eine Führung einer Transporteinheit eines linearen Langstatorlinearmotors ist beispielsweise in EP 3 457 560 A1 gezeigt. Bei einem Planarmotor ist üblicherweise keine oder nur abschnittsweise eine mechanische Führung vorgesehen, sondern eine Transporteinheit wird aufgrund elektromagnetischer Schwebekräfte geführt. Eine Führung einer Transporteinheit eines planaren Langstatorlinearmotors ist beispielsweise in der WO 2018/176137 A1 gezeigt.

EP 3 251 985 A1 lehrt, während des Betriebs eines Langstatorlinearmotors den Verschleiß an einer Transporteinheit oder der Transportstrecke zu erfassen, um damit Einfluss auf den Betrieb des Langstatorlinearmotors zu nehmen. Das ermöglicht aber keine Inbetriebnahme des Langstatorlinearmotors.

Nicht zuletzt muss im Betrieb auch die elektrische Versorgung der Antriebsspulen des Langstatorlinearmotors sichergestellt sein. Die elektrische Versorgung erfolgt aufgrund der großen örtlichen Ausdehnung eines Langstatorlinearmotors und aufgrund der vielen verbauten Antriebsspulen in der Regel durch mehrere elektrische Einspeisequellen, wobei jede Einspeisequelle eine Mehrzahl von Antriebsspulen mit elektrischer Energie versorgt. Für die elektrische Versorgung sind insbesondere transiente Bewegungen der Transporteinheiten (Beschleunigungen, Verzögerungen) kritisch, weil dafür höhere elektrische Leistungen benötigt werden, als bei Bewegungen mit konstanter Geschwindigkeit. Vorallem bei gleichzeitiger Beschleunigung einer großen Anzahl von Transporteinheiten (z.B. nach einem Stopp oder Nothalt), können große elektrische Leistungen benötigt werden. Im Falle eines Planarmotors erfordert auch das elektromagnetische Schweben der Transporteinheiten eine große Menge an elektrischer Energie. Im Falle von mit den Antriebsspulen realisierten elektromagnetischen Weichen wird auch für die elektromagnetische Weichenstellung mehr elektrische Energie benötigt, weil mit den Antriebsspulen zusätzlich zu den Kräften in Bewegungsrichtung auch Kräfte quer dazu erzeugt werden müssen.

Nicht zuletzt kann auch der Verschleißzustand der Transporteinheiten die benötigte elektrische Energie beeinflussen. Erhöht sich beispielsweise durch Verschleiß die Reibung zwischen Transporteinheit und Führungskonstruktion, können höhere Kräfte für die Bewegung und damit auch mehr elektrische Energie für die Bewegung erforderlich sein.

Für einen Langstatorlinearmotor ist es folglich wichtig, dass durch die thermische Auslegung (Kühlung), die mechanische Auslegung (wirkende Kräfte und Momente), die elektrische Auslegung (elektrische Versorgung der Antriebsspulen, Leistungselektronik zum Erzeugen der elektrischen Stellgrößen der Antriebsspulen) für den jeweiligen Anwendungsfall und den jeweiligen Langstatorlinearmotor ein störungsfreier Betrieb sichergestellt ist.

In DE 2012 025 326 A1 wird vorgeschlagen, in einem elektromagnetischen Transportsystem benachbarte Magnetspulen zu einer Magnetspulengruppe zusammenzufassen und die Magnetspulengruppe mit einem Steuergerät anzusteuern. Das soll den mechanischen und elektrischen Aufwand für das elektromagnetischen Transportsystem reduzieren. Das ermöglicht aber keine Inbetriebnahme des elektromagnetischen Transportsystems.

US 2019/0097514 A1 beschreibt das Auswählen eines bestimmten Linearmotors anhand vorgegebener Bedingungen. Damit wird aber nicht ein bestimmter Linearmotor in Betrieb genommen, sondern es wird der Linearmotor gesucht, der die Bedingungen erfüllt. Das ermöglicht aber keine Inbetriebnahme eines Linearmotors.

Es ist daher eine Aufgabe der gegenständlichen Erfindung die Inbetriebnahme einer Transporteinrichtung in Form eines Langstatorlinearmotors zu vereinfachen.

Diese Aufgabe wird erfindungsgemäß durch Merkmale des unabhängigen Anspruch 1 gelöst. Es wird somit anhand eines zeitlicher Verlaufs der elektrischen Stellgrößen der Antriebsspulen zur Realisierung eines Produktflusses eine thermische Auslegung der Transporteinrichtung überprüft und vor der Inbetriebnahme eine Transporteinrichtungskonfiguration mit einer thermischen Konfiguration geändert, wenn der Produktfluss aufgrund der thermischen Auslegung nicht umsetzbar ist. Durch Überprüfen der thermischen Konfiguration einer Transporteinrichtung in einer Transporteinrichtungskonfiguration, kann bereits vor der tatsächlichen Inbetriebnahme der Transporteinrichtung überprüft werden, ob ein vorgesehener Produktfluss mit der Transporteinrichtungskonfiguration überhaupt realisierbar ist. Falls der Produktfluss nicht realisiert werden kann, kann die Transporteinrichtungskonfiguration geändert werden, bis der Produktfluss umgesetzt werden kann. Damit können möglich Probleme bei der Umsetzung des Produktflusses bereits vor der Inbetriebnahme erkannt werden und durch Änderung der Transporteinrichtungskonfiguration behoben werden, sodass nach der Inbetriebnahme mit keinen weiteren Problemen im Betrieb, oder zumindest nur mehr mit wenigen Problemen, zu rechnen ist. Damit lässt sich eine Transporteinrichtung deutlich einfacher und effizienter in Betrieb nehmen als bisher. Ebenso lässt sich damit eine Transporteinrichtung auslegen.

Die Schritte der Ermittlung des thermischen Zustands und der Änderung der Transporteinrichtungskonfiguration kann bedarfsweise wiederholt werden, bis der Prozessfluss mit der aktuellen Transporteinrichtungskonfiguration umsetzbar ist. Damit kann die Inbetriebnahme sehr sicher realisiert werden und es können auch nicht unmittelbar erkennbare Querabhängigkeiten von Änderungen in den Konfigurationen der Transporteinrichtungskonfiguration erkannt und behoben werden.

Vorteilhaft wird der zeitliche Verlauf der elektrischen Stellgrößen der Antriebsspulen vorgegeben, indem die Bewegungen der Transporteinheiten zur Realisierung des Prozessflusses simuliert werden und dabei die zur Umsetzung der Bewegungen benötigten elektrischen Stellgrößen der Antriebsspulen ermittelt werden. In diesem Fall ist es vorteilhaft, wenn auch dieser Schritt der Überprüfung wiederholt wird. Durch die Simulation können verschiedenste Annahme und Vorgaben für den Produktfluss berücksichtigt werden, wodurch die Überprüfung auch vorteilhaft nur auf bestimmte besonders kritische Fälle beschränkt werden kann.

Weitere vorteilhafte Ausgestaltungen und Vorteile der Erfindung ergeben sich aus den abhängigen Ansprüchen und aus der folgenden Beschreibung der Erfindung.

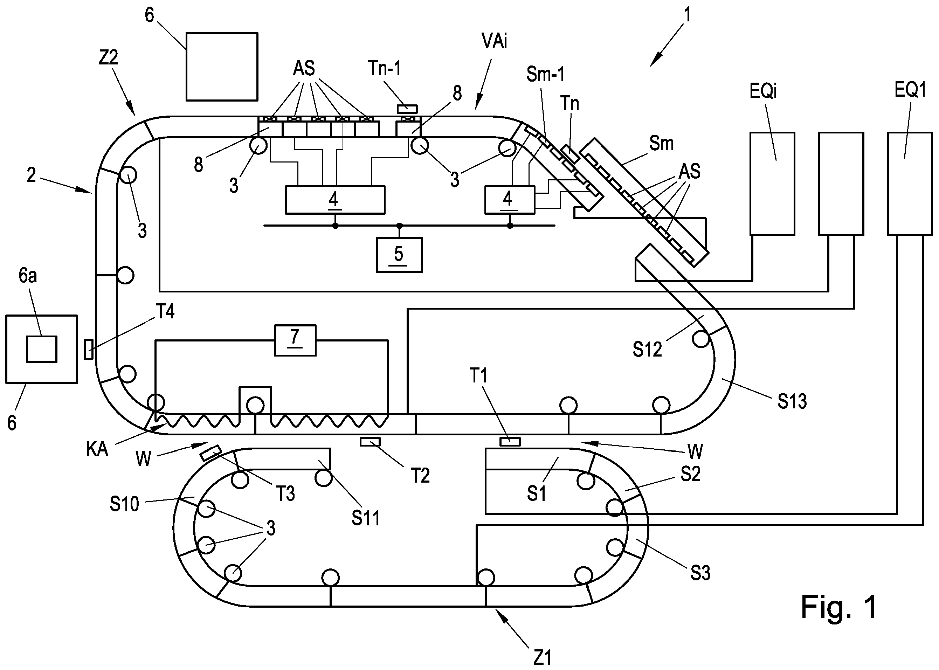

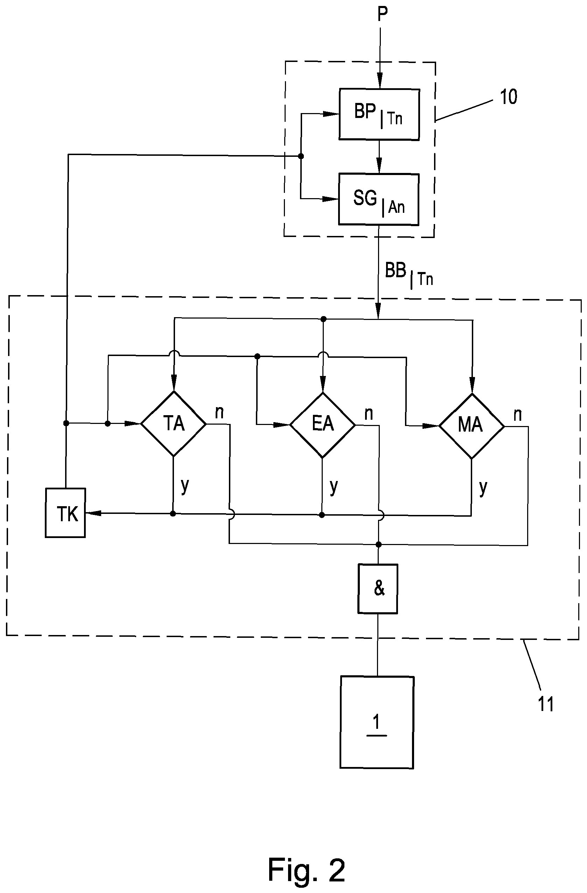

Die gegenständliche Erfindung wird nachfolgend unter Bezugnahme auf die Figuren 1 und 2 näher erläutert, die beispielhaft, schematisch und nicht einschränkend vorteilhafte Ausgestaltungen der Erfindung zeigen. Dabei zeigt
Fig.1 ein Ausführungsbeispiel einer Transporteinrichtung in Form eines Langstatorlinearmotors und
Fig.2 ein Flussdiagramm der Inbetriebnahme der Transporteinrichtung mit einem Langstatorlinearmotor.

In Fig.1 ist eine Transporteinrichtung 1 in Form eines linearen Langstatorlinearmotors dargestellt, anhand der die Erfindung ohne Einschränkung der Allgemeinheit im Folgenden beschrieben wird. Die Transporteinrichtung 1 besteht üblicherweise aus einer Mehrzahl von separaten Statormodulen Sm mit m > 1 (aus Gründen der Übersichtlichkeit sind in Fig.1 nicht alle Statormodule bezeichnet), die zu einem Stator 2 des Langstatorlinearmotors zusammengesetzt sind. Die Statormodule Sm können dazu auf einer, vorzugsweise, ortsfesten Stützkonstruktion (aus Gründen der Übersichtlichkeit nicht dargestellt) angeordnet sein. Am Stator 2 sind eine Vielzahl von Antriebsspulen AS angeordnet. Üblicherweise sind an einem Statormodul Sm eine Mehrzahl von Antriebsspulen AS angeordnet (in Fig.1 aus Gründen der Übersichtlichkeit nur für einige der Statormodule Sm dargestellt). Der Stator 2 bildet den möglichen Transportpfad der Transporteinrichtung 1 für eine Anzahl von Transporteinheiten Tn mit n > 1 aus, entlang dem die Transporteinheit Tn bewegbar sind. Der Transportpfad kann geschlossen sein oder offen ausgeführt sein. Der Transportpfad kann auch verschiedene Zweige Zk mit k ≥ 1 aufweisen, die wiederum offen oder geschlossen ausgeführt sein können. Zweige Z1, Z2 des Transportpfades können durch Weichen W miteinander verbunden sein, sodass eine Transporteinheit Tn von einem Zweig Z1 auf einen anderen Zweig Z2 wechseln und dort weiterbewegt werden kann. Die Weiche W kann mechanisch oder auch elektromagnetisch, wie beispielsweise in EP 3 109 998 B1 beschrieben, ausgeführt sein. Die elektromagnetische Weichenstellung in der Weiche kann mit den Antriebsspulen AS erfolgen (wie in EP 3 109 998 B1) und/oder mit zusätzlichen Weichenspulen. Bei einem planaren Langstatorlinearmotor kann der Transportpfad der Transporteinheiten Tn in der Bewegungsebene gewählt werden.

Die Statormodule Sm können auch in verschiedenen geometrischen Formen, beispielsweise Geradenmodule oder Kurvenmodule, ausgeführt sein, um Transportpfade mit verschiedenen Geometrien realisieren zu können. Der Geometrie eines Transportpfades sind keine Grenzen gesetzt und der Transportpfad kann sich in einer Ebene befinden, oder beliebig im Raum. Ebenso ist es möglich, dass der Transportpfad abschnittsweise auch aus einer anderen Fördereinrichtung als einem Langstatorlinearmotor ausgebildet ist. Beispielsweise kann eine Rückführungsstrecke für die Transporteinheiten Tn als einfaches Förderband ausgeführt sein, weil es für die Rückführung keinerlei Anforderungen an die Genauigkeit der Bewegung gibt. Gleichfalls ist es möglich, einen linearen und einen planaren Langstatorlinearmotor zu kombinieren. Beispielsweise könnte im Bereich von Bearbeitungsstationen ein planarer Langstatorlinearmotor vorgesehen sein, die durch lineare Langstatorlinearmotoren miteinander verbunden sind.

Auch die Regelung der Bewegung einer Transporteinheit Tn durch eine Regelungseinheit 4 und die damit in Zusammenhang stehende Ansteuerung der beteiligten Antriebsspulen AS und Positionserfassung der Transporteinheit Tn entlang des Transportpfades sind hinlänglich bekannt, beispielsweise aus der EP 3 385 110 A1 und der EP 3 376 166 A1. Üblicherweise sind eine Mehrzahl von Regelungseinheiten 4 vorgesehen, die jeweils eine Anzahl von Antriebsspulen AS regeln und die mit einer übergeordneten Anlagensteuereinheit 5 verbunden sind (beispielsweise durch einen Datenkommunikationsbus), wie in Fig.1 angedeutet.

Die Ausführung der Transporteinheiten Tn kann ebenso beliebig sein und es können an der Transporteinrichtung 1 auch unterschiedliche Transporteinheiten Tn bewegt werden, beispielsweise verschieden große Transporteinheiten Tn oder Transporteinheiten Tn mit unterschiedlichen Produktaufnahmen zur Beförderung verschiedener Produkte oder Produkte in verschiedenen Fertigungsstadien.

Entlang des Transportpfades kann auch eine Anzahl von Bearbeitungsstationen 6 vorgesehen sein. In einer Bearbeitungsstation 6 kann ein mit einer Transporteinheit Tn befördertes Produkt bearbeitet werden. Es kann grundsätzlich eine beliebige Bearbeitung vorgesehen sein, was beispielsweise ein gewisser Fertigungs- oder Montageschritt am Produkt, eine Änderung einer Ausrichtung des Produkts auf der Transporteinheit Tn, ein Füllvorgang, eine Messung am Produkt, eine Untersuchung des Produkts usw. sein kann. In der Bearbeitungsstation 6 sind die dazu erforderlichen Bearbeitungseinrichtungen 6a vorgesehen. Dazu kann die Transporteinheit Tn in der Bearbeitungsstation 6 angehalten werden, oder die Bearbeitung kann in der Bearbeitungsstation 6 auch während der Bewegung der Transporteinheit Tn erfolgen. Das Produkt kann zur Bearbeitung auch von der Transporteinheit Tn entfernt und danach wieder auf die gleiche oder eine andere Transporteinheit Tn abgelegt werden. Eine Bearbeitungsstation 6 kann auch zum Einschleusen von Produkten oder Ausschleusen von Produkten dienen. Beim Einschleusen wird ein Produkt auf eine Transporteinheit Tn abgelegt und beim Ausschleusen von der Transporteinheit Tn entnommen. Beim Ausschleusen ist das Produkt in der Regel fertig bearbeitet oder an der geplanten Endposition angelangt oder es wird als Ausschuss entfernt.

Durch das Bestromen von Antriebsspulen AS mit einem Spulenstrom (z.B. durch Anlegen einer Spulenspannung) im Bereich einer Transporteinheit Tn wird ein Antriebsmagnetfeld erzeugt, das in bekannter Weise mit Antriebsmagneten an einer Transporteinheit Tn (in Fig.1 aus Gründen der Übersichtlichkeit nicht dargestellt) zusammenwirkt, um die Transporteinheit Tn in gewünschter Weise zu bewegen. Das Antriebsmagnetfeld wird zur Bewegung der Transporteinheit Tn in Bewegungsrichtung durch entsprechende Steuerung der Antriebsspulen AS weiterbewegt. Eine Regelungseinheit 4 ermittelt hierfür in jedem Zeitschritt der Regelung der Bewegung der Transporteinheit Tn, beispielsweise im Millisekundenbereich, die benötigten elektrischen Stellgrößen der Antriebsspulen AS, die aktiv an der Bewegung der Transporteinheit Tn beteiligt sind, beispielsweise die anzulegenden Spulenspannungen dieser aktiven Antriebsspulen AS.

Durch das Zusammenwirken des Antriebsmagnetfeldes und der Antriebsmagnete wirken auf die Transporteinheit Tn Antriebskräfte, die auch so wirken können, dass auf die Transporteinheit Tn Momente wirken. Wenn beispielsweise an der Transporteinheit Tn in Bewegungsrichtung gesehen an beiden Seiten Antriebsmagnete vorgesehen sind und am Stator 2 an beiden Seiten Antriebsspulen AS, dann können auf den beiden Seiten auch unterschiedliche Antriebskräfte in Bewegungsrichtung erzeugt werden, die dann ein Moment auf die Transporteinheit Tn hervorrufen. Dabei können bei entsprechender Anordnung der Antriebsspulen AS und Antriebsmagnete Antriebskräfte in allen oder einigen Raumrichtungen erzeugt werden. Üblicherweise wirkt eine Antriebskraft in Bewegungsrichtung, um die Transporteinheit Tn vorwärts zu bewegen. Häufig werden auch Antriebskräfte quer zur Bewegungsrichtung erzeugt, beispielsweise zur elektromagnetischen Weichenstellung in einer Weiche oder um wirkende externe Kräfte auszugleichen. Bei einem planaren Langstatorlinearmotor 1 werden auch Antriebskräfte normal auf die Bewegungsebene erzeugt, um die Transporteinheit Tn in Schwebe zu halten.

Die Antriebskräfte werden verwendet, um mit der Transporteinheit Tn ein bestimmtes Bewegungsprofil der Bewegung der Transporteinheit Tn, beispielsweise mit bestimmten kinematischen Größen, wie Positionen, Geschwindigkeiten, Beschleunigungen, Rucke usw., zu realisieren. Ein Bewegungsprofil ist ein zeitlicher Verlauf solcher kinematischen Größen oder äquivalent ein Verlauf solcher kinematischen Größen über die Position der Transporteinheit Tn entlang des Stators 2.

Die Bewegung einer Transporteinheit Tn entlang des Stators 2 ist oftmals nicht deterministisch, d.h. es kann nicht vorab gesagt werden, wann welche Transporteinheit Tn an welcher Position des Stators 2 sein wird oder welche Geschwindigkeit, Beschleunigung eine Transporteinheit Tn zu einem bestimmten Zeitpunkt oder an einer bestimmten Position hat. Hierfür kann es vielerlei Gründe geben, von denen einige nachfolgend beispielhaft genannt werden. Beispielsweise ist an einer Weiche W eine Weichenarbitrierung erforderlich, wodurch festgelegt wird, welche Transporteinheit Tn durch die Weiche W fahren darf, wenn zwei Transporteinheiten Tn gleichzeitig durch eine Weiche W fahren möchten. Es kann sein, dass idente Bearbeitungsstationen 6 auf unterschiedlichen Zweigen Zk oder Abschnitten des Stators 2 vorgesehen sind, um den möglichen Produktdurchfluss zu erhöhen. Welches Produkt, und damit welche Transporteinheit Tn, zu welcher Bearbeitungsstation 6 geleitet wird, wird durch eine übergeordnete Steuerung anhand gewisser Kriterien (beispielsweise eine Anzahl der wartenden Transporteinheiten Tn vor einer Bearbeitungsstation 6) festgelegt werden. Mittels einer Kollisionsüberwachung kann sichergestellt werden, dass hintereinanderfahrende Transporteinheiten Tn nicht miteinander kollidieren. Dabei kann die Bewegung einer der hintereinanderfahrenden Transporteinheiten Tn nach vorgegebenen Kriterien geändert werden, um eine Kollision zu vermeiden. Produkte können in einen Puffer gepuffert werden, bis eine Bearbeitungsstation 6 frei wird. Es können auch zufällige Qualitätskontrollen vorgesehen sein, wobei ein beliebiges auf einer Transporteinheit Tn bewegtes Produkt aus dem Produktfluss herausgenommen und einer Qualitätskontrolle unterzogen wird. Danach kann es wieder in den Produktfluss eingegliedert werden. Die Bewegungsprofile der an der Umsetzung des Produktflusses beteiligten Transporteinheiten Tn werden demnach nach vorgegebenen Regeln für die Bewegungen der Transporteinheiten Tn erstellt. Die vorgegebenen Regeln dienen der Bewegungssteuerung der Transporteinheiten Tn, also wie die Transporteinheiten Tn entlang des Stators 2 zu bewegen sind.

Deshalb wird in einer Transporteinrichtung 1 in Form eines Langstatorlinearmotors oftmals ein gewünschter Produktfluss festgelegt, beispielsweise in einer übergeordneten Steuerung, wie z.B. in der Anlagensteuereinheit 5. Durch den Produktfluss werden lediglich bestimmte von einer Transporteinheit Tn zu erreichende Positionen entlang des Stators 2 vorgegeben, beispielsweise von einer Startposition (z.B. eine Einschleusestelle) zu einer Endposition (z.B. eine Ausschleuesestelle), oder eine anzufahrende Weiche. Zwischen Startposition und Endposition können im Produktfluss auch noch gewisse Bearbeitungsschritte vorgesehen sein, die an vorgesehenen Bearbeitungsstationen 6 auszuführen sind. Zwischen diesen Positionen kann die Transporteinheit Tn im Rahmen der vorgegebenen Regeln für die Bewegungen der Transporteinheiten Tn beliebig bewegt werden. Das Produkt wird dabei auf einer Transporteinheit Tn, beispielsweise unter Kontrolle der Anlagensteuereinheit 5, entlang des Stators 2 bewegt, um den Produktfluss zu realisieren. Dazu kann die Anlagensteuereinheit 5 in vorgegebenen Zeitschritten, beispielsweise im Millisekundenbereich, für jede der bewegten Transporteinheiten Tn eine Bewegungssollgröße, beispielsweise eine Sollposition oder Sollgeschwindigkeit, ermitteln, die von jeder der bewegten Transporteinheiten Tn in diesem Zeitschritt eingenommen werden soll. Aus den derart ermittelten Bewegungssollgrößen ermitteln dann die Regelungseinheiten 4 elektrische Stellgrößen, beispielsweise Spulenströme, Spulenspannungen oder magnetische Flüsse, mit denen die an der Bewegung der Transporteinheiten Tn beteiligten aktiven Antriebsspulen AS bestromt werden, um die Bewegungssollgröße in jeweiligen Zeitschritt einzuregeln.

Eine Regelungseinheit 4 und eine Anlagensteuereinheit 5 kann als mikroprozessorbasierte Hardwareeinheit implementiert sein, auf der entsprechende Software ausgeführt wird. Ebenso ist eine Implementierung als integrierter Schaltkreis, wie als anwendungsspezifische integrierte Schaltung (ASIC) oder Field Programmable Gate Array (FPGA), oder speicherprogrammierbare Steuerung (SPS) möglich. Es kann eine Hardwareeinheit vorgesehen sein, oder die Regelung der Bewegung der Transporteinheiten Tn und/oder die Ansteuerung der Antriebsspulen AS kann auch auf mehrere Hardwareeinheiten aufgeteilt sein.

Der Produktfluss kann in der Regel auf unterschiedlichste Wege und mit unterschiedlichen Bewegungsprofilen der Transporteinheiten Tn realisiert werden. Ein Bewegungsprofil beschreibt die Kinematik der Bewegung der Transporteinheit Tn, also insbesondere die Bewegungsgrößen Position, Geschwindigkeit und/oder Beschleunigung (und gegebenenfalls auch weiterer zeitlichen Ableitungen davon) über die Zeit, beispielsweise in jedem Zeitschritt der Regelung der Bewegung einer Transporteinheit Tn. Im Falle von Geschwindigkeit oder Beschleunigung (oder weiteren zeitlichen Ableitungen davon) kann die Kinematik auch in Abhängigkeit von der Position am Stator 2 beschrieben werden. Beispielsweise kann ein Bearbeitungsschritt auf mehreren gleichen Bearbeitungsstationen 6 ausgeführt werden, wobei erst während der Bewegung des Produktes auf der Transporteinheit Tn entschieden wird, welche Bearbeitungsstation 6 angefahren wird. Oder es ist eine bestimmte Position am Stator 2 auf mehrere Wege erreichbar, wobei erst während der Bewegung des Produktes auf der Transporteinheit Tn entschieden wird, welcher Weg genommen wird. Das Bewegungsprofil kann auch durch eine Kollisionsvermeidung und andere übergeordnete Steueralgorithmen beeinflusst werden.

Der fehlende Determinismus der Bewegung der Transporteinheiten Tn erschwert aber die Inbetriebnahme einer Transporteinrichtung 1 in Form eines Langstatorlinearmotors erheblich, weil sich mitunter erst nach der Inbetriebnahme herausstellt, dass die Transporteinrichtungskonfiguration der Transporteinrichtung 1 nicht geeignet ist, mit den Transporteinheiten Tn den gewünschten Produktfluss zu ermöglichen.

Die Transporteinrichtungskonfiguration umfasst die thermische Konfiguration des Langstatorlinearmotors, also wie, mit welchen Komponenten und/oder mit welchen Einschränkungen die Transporteinrichtung 1 thermisch aufgebaut ist.

Die thermische Konfiguration umfasst beispielsweise eine Kühlung des Stators 2 oder Teilen davon.

Ein zulässiger Bewegungsparameter kann beispielsweise eine maximal zulässige Bewegungsgröße einer Transporteinheit Tn, wie eine maximal zulässige Geschwindigkeit oder eine maximal zulässige Beschleunigung, sein. Dabei kann für jede einzelne Transporteinheit Tn zumindest ein zulässiger Bewegungsparameter vorgegeben sein, oder für gleiche Typen von Transporteinheiten Tn, oder für bestimmte zu befördernde Produkte. Es ist auch möglich, einen zulässigen Bewegungsparameter von der beförderten Masse und/oder von der Geometrie des Stators 2 abhängig zu machen. Beispielsweise kann eine niedrigere zulässige Geschwindigkeit vorgegeben werden, wenn eine größere Masse befördert wird. In einer Kurve kann eine niedrigere zulässige Geschwindigkeit vorgegeben sein, als an einem geraden Abschnitt des Transportpfades.

Zur Erzeugung eines bewegten Antriebsmagnetfeldes zur Bewegung einer Transporteinheit Tn zur Realisierung eines Bewegungsprofils werden Antriebsspulen AS im Bereich der Transporteinheit Tn durch Anlegen einer Spulenspannung mit einem Spulenstrom bestromt. Durch die Verlustleistung der Antriebsspulen AS wird dabei Wärme erzeugt, die den Stator 2, oder die Statormodule Sm des Stators 2, erwärmen. Die Erwärmung des Stators 2 hängt unter anderem vom Bewegungsprofil aber auch von der Anzahl der Bewegungszyklen pro Zeiteinheit ab. Das Bewegungsprofil, beispielsweise ein Geschwindigkeits-Zeitverlauf oder ein Positions-Zeitverlauf entlang des Stators 2, ist im Wesentlichen vom umzusetzenden Produktfluss abhängig, der mit der Transporteinrichtung 1 realisiert werden soll. Das Bewegungsprofil kann von der Anlagensteuereinheit 5 erstellt werden und kann beispielsweise entlang des Stators 2 Beschleunigungen (auch im Sinne von Verzögerungen), Stopps, Anfahrten, Konstantgeschwindigkeitsphasen, Geschwindigkeitsrampen usw. umfassen. Die Erwärmung hängt aber auch von anderen Einflüssen, wie Weichenarbitrierung, Kollisionsvermeidung, der Abstand zwischen hintereinanderfahrenden Transporteinheiten Tn usw., ab, also im Wesentlichen von der Umsetzung des Produktflusses durch die Anlagensteuereinheit 5. Die Anzahl der Bewegungszyklen pro Zeiteinheit ist die Anzahl der Transporteinheiten Tn pro Zeiteinheit, die über einen bestimmten Abschnitt des Stators 2 fahren. Je höher die Bewegungszyklen pro Zeiteinheit, umso öfter müssen die Antriebsspulen AS bestromt werden. Die Wärmeerzeugung kann daher entlang des Stators 2, beispielsweise in den verschiedenen Statormodulen Sm des Stators 2 oder in einzelnen Antriebsspulen AS, im Betrieb der Transporteinrichtung 1 sehr unterschiedlich sein.

Ein Bewegungsprofil, das hohe Spulenströme benötigt, beispielsweise aufgrund hoher Beschleunigungen, hoher transportierter Masse oder im Bereich einer elektromagnetischen Weiche zur Weichenstellung, aber nur sehr selten an einem Statormodul Sm ausgeführt wird, wird kaum zu einem thermischen Problem führen, weil das Statormodul Sm ausreichend Zeit hat, die erzeugte Wärme passiv abzuführen, beispielsweise über Wärmeleitung in die Stützkonstruktion oder Wärmestrahlung in die Umgebung. Wird dieses Bewegungsprofil aber häufig an einem Statormodul Sm ausgeführt, kann die damit erzeugte Wärme möglicherweise nicht mehr ohne weiteres passiv abgeführt werden. Auch ein Bewegungsprofil, das verhältnismäßig niedrige Ströme erfordert, kann zu thermischen Problemen führen, wenn die Anzahl der Bewegungszyklen hinreichend hoch ist.

Unter thermischem Problem wird hierbei insbesondere eine Wärmebelastung des Stators 2 bzw. eines Statormoduls Sm, aber auch einzelner Antriebsspulen AS, verstanden, bei der eine Überschreitung einer vorgegebenen Maximaltemperatur eintritt, bei der eine Komponente des Stators 2 bzw. des Statormoduls Sm, wie beispielsweise die Spulenwicklung, der Isolationslack, die die Antriebsspulen AS umgebende Vergussmasse, ein Elektronikbauteil usw., beschädigt oder gar zerstört werden würde.

Daher ist an der Transporteinrichtung 1 an bestimmten Stellen oftmals eine aktive Kühlung 7 des Stators 2, beispielsweise bestimmter Statormodule Sm, vorgesehen (Fig.1). Ein Abschnitt des Stators 2, der aktiv gekühlt wird, wird auch Kühlabschnitt KA genannt. Die Kühlung 7 kann unterschiedlich ausgeführt sein. Die aktive Kühlung 7 umfasst beispielsweise einen Kühlkreis, der ein Kühlmedium durch einen Kühlabschnitt KA des Stators 2 umwälzt, um Wärme aufzunehmen und vom Stator 2 abzuführen (wie im Beispiels nach Fig.1). Die Kühlung kann aber auch in Form eines Kühlkörpers mit Lüfter oder mit thermoelektrischen Modulen ausgeführt sein. Eine vorgesehene aktive Kühlung 7 hat eine bekannte Kühlleistung. Bei einer passiven Kühlung erfolgt die Kühlung hingegen rein durch die sich ergebende natürliche Wärmeleitung in andere kühlere Bauteile und/oder durch Wärmestrahlung in die Umgebung.

Es können mehrere aktive Kühlungen 7 entlang des Transportpfades vorgesehen sein, die jeweils einen Kühlabschnitt KA kühlen. Eine Kühlung 7, beispielsweise ein Kühlkreis, kann auch mehrere Statormodule Sm aktiv kühlen oder auch nur einen Teil eines Statormoduls Sm. Ein Kühlkreis einer aktiven Kühlung 7 kann in Serie durch mehrere Kühlabschnitte KA geführt sein (wie in Fig.1), kann aber auch parallel mehrere Kühlabschnitte KA des Stators 2 kühlen.

Die elektrischen Spulenspannungen zum Bestromen der Antriebsspulen AS werden von einer Leistungselektronik 8 (in Fig.1 für einige Antriebsspulen AS angedeutet) erzeugt. Die Leistungselektronik 8 muss daher in der Lage sein, zu jedem Zeitpunkt die benötigte elektrische Leistung (Spannungen, Ströme) bereitzustellen. Die Leistungselektronik 8 umfasst in der Regel Stromrichter (beispielsweise in Form von Halbbrücken- oder Vollbrückenschaltungen mit Halbleiterschaltern) zum Erzeugen der elektrischen Ströme oder Spannungen, aber auch andere elektrische Komponenten, wie Filter, Strombalancer für eine Gruppe von Antriebsspulen AS usw. Die Belastung der Leistungselektronik 8, insbesondere aufgrund fließender elektrischer Ströme, hängt natürlich auch wesentlich von den Bewegungsprofilen der Transporteinheiten Tn ab.

Die elektrische Energie zum Bestromen der Antriebsspulen AS wird von einer Anzahl elektrischer Einspeisequellen EQi mit i ≥ 1 bereitgestellt (Fig.1), wobei jede Einspeisequelle EQi einen Versorgungsabschnitt VAi des Stators 2, was einer Anzahl von Antriebsspulen AS des Stators 2 entspricht, mit elektrischer Energie versorgt. Beispielsweise versorgt jede Einspeisequelle EQi eine Anzahl von Statormodulen Sm mit elektrischer Energie, wobei jedes Statormodul Sm eine Anzahl von Antriebsspulen AS umfasst. Die von einer Einspeisequelle EQi versorgten Statormodule Sm können durch elektrische Verbindungen 3 seriell miteinander verbunden sein, wie in Fig.1 dargestellt. Eine Einspeisequelle EQi kann natürlich nur eine gewisse maximale elektrische Leistung Pₘₐₓᵢ bereitstellen, die bekannt ist. Je mehr Transporteinheiten Tn gleichzeitig auf einem Versorgungsabschnitt VAi des Stators 2 bewegt werden, umso mehr elektrische Leistung muss die Einspeisequelle EQi dieses Versorgungsabschnittes VAi zur Bestromung der Antriebsspulen AS dieses Versorgungsabschnittes VAi bereitstellen. Ebenso gilt, dass Bewegungen mit einer Beschleunigung der Transporteinheit Tn oder Transporteinheiten Tn mit einer höheren Beladung (Masse des beförderten Produkts) mehr elektrische Leistung benötigten, als Bewegungen mit konstanter Geschwindigkeit der Transporteinheit Tn. Gleiches gilt für erhöhte Reibung zwischen Stator 2 und einer Transporteinheit Tn, beispielsweise aufgrund von Verschleiß einer Transporteinheit Tn, was ebenfalls mehr elektrische Leistung für die Bewegung der Transporteinheit Tn erfordern kann.

Aufgrund der Geometrie des Transportpfades im Raum und der Kinematik der Bewegung (Bewegungsprofile) der Transporteinheit Tn, die von den Antriebskräften hervorgerufen wird, und aufgrund der Masse der Transporteinheit Tn und des darauf beförderten Produktes, sowie aufgrund der Lage des Produktes (Schwerpunkt) auf der Transporteinheit Tn wirken, neben den Antriebskräften, auch externe Kräfte (was auch Momente umfasst) auf die Transporteinheit Tn.

Als externe Kraft wird beispielsweise eine Fliehkraft in einer Kurve angesehen, aber auch eine zeitlich variierende Gewichtskraft, oder ähnliches. Als externe Kräfte können auch Prozesskräfte in einer Bearbeitungsstation 6 auf die Transporteinheit Tn wirken, also Kräfte, die durch eine Bearbeitung eines mit einer Transporteinheit Tn bewegten Produktes in einer Bearbeitungsstation 6 entstehen. Die Masse der Transporteinheit Tn und des beförderten Produkts (falls vorhanden), sowie die Lage des Produkts auf der Transporteinheit Tn ist bekannt. Es muss während der gesamten Bewegung der Transporteinheit Tn einerseits sichergestellt sein, dass mit den möglichen Antriebskräften überhaupt das Bewegungsprofil realisierbar ist. Andererseits muss auch sichergestellt sein, dass die Transporteinheit Tn aufgrund der wirkenden externen Kräfte nicht vom Stator 2 unerwünscht abgehoben wird oder sogar vom Stator 2 fällt.

Nachdem die Bewegungsprofile aller an der Transporteinrichtung 1 bewegten Transporteinheiten Tn vorab in der Regel nicht bekannt sind, sondern sich erst im Betrieb der Transporteinrichtung 1 zur Realisierung des Produktflusses ergeben, kann bei der Inbetriebnahme der Transporteinrichtung 1 nicht sicher abgeschätzt werden, ob die Transporteinrichtungskonfiguration den gewünschten Betrieb überhaupt zulässt.

Daher wird zur Inbetriebnahme einer Transporteinrichtung 1 in Form eines (linearen oder planaren) Langstatorlinearmotors die thermische Auslegung des Langstatorlinearmotors 1 überprüft.

Dazu kann zuerst der gewünschte Produktfluss für eine bestimmte Simulationsdauer simuliert werden. Die Simulationsdauer sollte dabei hinreichend lange gewählt werden, um ein möglichst gutes Bild der Belastung der Transporteinrichtung 1 zu erhalten. Beispielsweise könnte die Simulation so lange ausgeführt werden, bis eine vorgegebene Anzahl von Produkten den Produktfluss durchlaufen haben. Je nach Anwendung und Produktfluss können das mehrere hundert, mehrere tausend oder auch mehr oder weniger Produkte sein. Ebenso könnte eine Simulationsdauer gewählt werden, die einer bestimmten Zeitspanne im Echtbetrieb entspricht, beispielsweise ein Tag Echtbetrieb der Transporteinrichtung 1. Die Simulation kann auch nur einen bestimmten Zustand der Transporteinrichtung 1 umfassen, beispielsweise ein Nothalt mit anschließendem Wiederanfahren, oder ein bestimmter Fehlerfall, beispielsweise der Ausfall eines bestimmten Zweiges oder einer bestimmten Bearbeitungsstation 6. Der Fachmann ist jedenfalls in der Lage für den jeweiligen Simulationsfall, eine geeignete Simulationsdauer festzulegen.

Bei der Simulation des Produktflusses werden die Bewegungen der Transporteinheiten Tn entlang des möglichen Transportpfades unter den gleichen Bedingungen wie im Echtbetrieb simuliert. Hierbei ist anzumerken, dass bei zwei Simulationen des Produktflusses die Bewegungen der Transporteinheiten Tn aufgrund der obigen Ausführungen üblicherweise nicht gleich sein werden. Die Simulation kann anhand der bekannten Geometrie des Stators 2 und der sich ergebenden Bewegungsprofile der Transporteinheiten Tn erfolgen, wobei in der Simulation, wie im Echtbetrieb, übergeordnete Steuerungen wie eine Weichenarbitrierung, eine Kollisionsvermeidung, eine Pfadsteuerung (z.B. wenn eine Position auf unterschiedlichen Wegen erreicht werden kann), eine Auswahl einer Bearbeitungsstation usw., für die Ausführung des Produktflusses sorgen. Bei der Simulation kann die Anlagensteuereinheit 5 und auch die Regelungseinheit 4 gleichbleiben, oder durch die Simulation ersetzt werden. In der Simulation wird in jedem Zeitschritt der Simulation der kinematische Zustand der Transporteinheit Tn (im Wesentlichen Position am Transportpfad, Geschwindigkeit, Beschleunigung usw.) am Ende des aktuellen Zeitschrittes der Simulation (üblicherweise im Millisekundenbereich) ermittelt. Simuliert werden dabei auch die elektrischen Stellgrößen für jeden Zeitschritt der Regelung für die an den Bewegungen der Transporteinheiten Tn beteiligten Antriebsspulen AS.

Bei der Simulation kann im Wesentlichen wie im Echtbetrieb vorgegangen werden. Beispielsweise werden in jedem Zeitschritt der Simulation die Bewegungssollgrößen der Transporteinheiten Tn ermittelt, um den vorgegebenen Prozessfluss umzusetzen. Die Bewegungssollgrößen geben zu jedem Zeitpunkt der Regelung den gewünschten kinematischen Zustand (Position, Geschwindigkeit, Beschleunigung usw.) jeder beteiligten Transporteinheit Tn vor. Die Anzahl der simulierten Transporteinheiten Tn entspricht vorzugsweise der für den Echtbetrieb vorgesehenen Anzahl. Die Bewegungssollgrößen der Transporteinheiten Tn sollen am Ende des Zeitschrittes durch die Regelung bestmöglich eingestellt sein. Aus den Bewegungssollgrößen kann die Regelungseinheit 4 anhand der implementierten Regelung, oder durch die Simulation der Regelungseinheit, die elektrischen Stellgrößen zum Bestromen der Antriebsspulen AS ermitteln, um diese Bewegungssollgrößen einzustellen. Falls dazu Istgrößen benötigt werden können diese aus einem Modell des Langstatorlinearmotors gewonnen werden. Das Modell kann beispielsweise den sich ergebenden kinematischen Zustand einer Transporteinheit Tn ermitteln, wenn die Antriebsspulen AS mit den elektrischen Stellgrößen des letzten Zeitschritts der Regelung bestromt werden. Im Detail könnten anhand der elektrischen Stellgrößen, das wirkende Antriebsmagnetfeld ermittelt werden und daraus die wirkenden Antriebskräfte, woraus wiederum die auf die Transporteinheit Tn wirkende Beschleunigung und Positionsänderung folgt. Die sich ergebende Position entspricht dann der Istposition. Dazu kann auch ein mechanisches Modell benötigt werden, um andere auf die Transporteinheit Tn wirkenden Kräfte zu ermitteln, beispielsweise Reibungskräfte, Führungskräfte, externe Kräfte usw. Die gleichzeitige Verwendung mehrere Modelle kann durch bekannte Co-Simulationsverfahren umgesetzt werden. Daraus können für den aktuellen Zeitschritt der Regelung die Istgrößen erhalten werden. Als Istgrößen für die Regelung der Bewegung in der Regelungseinheit 4 können vereinfacht auch die Bewegungssollgrößen des vorangegangenen Zeitschrittes der Simulation herangezogen werden. Damit könnte die benötigte Beschleunigung und Antriebskraft ermittelt werden und die dafür erforderlichen elektrischen Stellgrößen. Die elektrischen Stellgrößen können dann für jeden Zeitschritt der Regelung vorzugsweise so ermittelt werden, dass die Differenz zwischen der aktuellen Bewegungssollgröße und Istgröße möglichst klein wird. In der Simulation wird dazu vorzugsweise das gleiche Regelgesetz in der Regelungseinheit 4 verwendet, wie im Echtbetrieb der Transporteinrichtung 1.

Die Bewegungen der an der Umsetzung des Produktflusses beteiligten Transporteinheiten Tn kann somit gleichwertig in Form eines Bewegungsprofils (z.B. Geschwindigkeit über Zeit oder Position) für jede Transporteinheit Tn, oder für jede Transporteinheit Tn in Form einer zeitlichen Abfolge von Bewegungssollgrößen für jeden Zeitschritt der Regelung, oder in Form einer zeitlichen Abfolge elektrischer Stellgrößen der Antriebsspulen AS über die Simulationsdauer für jeden Zeitschritt der Regelung beschrieben werden.

Die Beschreibung der Bewegungen der Transporteinheiten Tn kann aber auch bekannt oder vorgegeben sein. Beispielsweise kann die Beschreibung der Bewegungen der Transporteinheiten Tn schon einmal simuliert worden sein und kann nun erneut verwendet werden, um die Inbetriebnahme der Transporteinrichtung 1 durchzuführen.

Für die Inbetriebnahme der Transporteinrichtung 1 wird anhand der Beschreibung der Bewegungen der Transporteinheiten Tn die thermische Auslegung (z.B. Kühlung) überprüft. Das bedeutet, dass ein thermischer Zustand zumindest eines Teils der Transporteinrichtung ermittelt wird und kontrolliert wird, ob der ermittelte thermische Zustand durch die thermische Konfiguration der Transporteinrichtungskonfiguration TK umsetzbar ist. Diese Überprüfung erfolgt auf Basis der Beschreibung der Bewegungen der Transporteinheiten Tn in einer Überprüfungseinheit 11, in der Regel anhand von geeigneter Software und/oder vorhandenen Modellen verschiedener Teile der Transporteinrichtung 1.

Für die Überprüfung der thermischen Auslegung kann ein Wärmemodell des Stators 2 verwendet werden, mit dem aus den elektrischen Stellgrößen für die an den Bewegungen der Transporteinheiten Tn beteiligten Antriebsspulen AS die Erwärmung des Stators 2 oder auch einer einzelnen Antriebsspule AS ermittelt wird. Dabei können auch Eisenverluste im Stator 2, geschwindigkeitsabhängige Verluste oder Verluste zur Überwindung der Rastkräfte (das sogenannte "cogging") berücksichtigt werden. Dabei wird die Erwärmung zumindest an einem Teil des Stators 2 ermittelt, vorzugsweise am ganzen Stator 2, oder auch nur an einer Antriebsspule AS. Das Wärmemodell kann auch die Erwärmung anderer Teile des Langstatorlinearmotors, die für die thermische Auslegung dem Stator 2 zugeordnet werden können, ermitteln, beispielsweise die Leistungselektronik, eine Regelungseinheit 4 usw. Damit kann auch die Erwärmung solcher Teile überprüft werden. Aus den elektrische Stellgrößen lässt sich in jedem Zeitschritt der Überprüfung (der dem Zeitschritt der Regelung entsprechen kann) für jede Antriebsspule AS die Verlustleistung und damit die dem Stator 2 zugeführte Wärme ermitteln. Gleichfalls kann durch das Wärmemodell die Wärmeabfuhr am Stator 2 in jedem Zeitschritt der Überprüfung ermittelt werden. Die Wärmeabfuhr kann durch Wärmeleitung in einen umgebenden Bauteil, Wärmestrahlung an die Umgebung, Konvektion durch die Umgebungsluft und/oder durch eine aktive Kühlung 7 (falls vorhanden) erfolgen. Ebenso können damit die Wärmezufuhr und Wärmeabfuhr aus anderen Teilen des Stators 2 ermittelt werden. Daraus kann in jedem Zeitschritt der Überprüfung die Temperatur des Stators 2, oder eines Teiles davon, oder einer bestimmten Antriebsspule AS ermittelt werden. Der Stator 2 wird hierfür vorzugsweise örtlich diskretisiert, beispielsweise in Statorabschnitte, die der Breite einer Antriebsspule AS entspricht. Für die Überprüfung kann in der Transporteinrichtungskonfiguration als Teil der thermischen Konfiguration eine zulässige Höchsttemperatur des Stators 2 oder einer Antriebsspule AS vorgegeben sein. Es können an unterschiedlichen Stellen des Stators 2 auch unterschiedliche Höchsttemperaturen vorgegeben werden. Beispielsweise kann die zulässige Temperatur in einer Weiche W niedriger sein, als außerhalb einer Weiche. Überschreitet die ermittelte Temperatur des Stators 2 oder einer Antriebsspule AS die zulässige Temperatur, wird ein Problem der thermischen Auslegung festgestellt. Dabei kann es durchaus vorkommen, dass die zulässige Temperatur eines Transportabschnitts eingehalten wird, an einer bestimmten Antriebsspule AS des Transportabschnittes aber die zulässige Temperatur überschritten wird. Anstelle einer Temperatur können natürlich auch andere Wärmegrößen für die Beurteilung herangezogen werden, beispielsweise eine zugeführte Gesamtwärmemenge.

Wird durch die Simulation ein Problem in der thermischen Auslegung festgestellt, wird die Transporteinrichtungskonfiguration TK geändert. Danach kann die Überprüfung bedarfsweise wiederholt werden, bis keine Probleme mehr auftreten. Auf diese Weise kann die Transporteinrichtung 1 sicher in Betrieb genommen werden.

Zur Wiederholung der Überprüfung kann eine bereits ermittelte Beschreibung der Bewegungen der Transporteinheiten Tn verwendet werden, beispielsweise dieselbe wie bei der vorhergehenden Überprüfung. Es kann aber der Produktfluss auch neu simuliert werden und daraus eine neue Beschreibung der Bewegungen der Transporteinheiten Tn zur Überprüfung gewonnen werden.

Die Geometrie des Stators 2 oder einer Transporteinheit Tn der Transporteinrichtung 1 könnte in der Transporteinrichtungskonfiguration geändert werden. Nachdem die Transporteinrichtung 1 aber oftmals schon aufgebaut ist oder geplant ist, wird man oftmals an der Geometrie des Stators 2 oder einer Transporteinheit Tn nichts ändern wollen. Es könnte aber auch die Geometrie oder Lage einer Produktaufnahme einer Transporteinheit Tn geändert werden, um Einfluss auf die entstehenden Kräfte zu nehmen. Die Geometrie des Stators 2 kann aber auch die thermische Auslegung beeinflussen, beispielsweise können sich die benötigten Antriebskräfte verringern, wenn eine Steigung eines Transportabschnittes verkleinert wird.

In der Transporteinrichtungskonfiguration TK kann auch das Kühlkonzept geändert werden. Beispielsweise kann die Kühlung 7 eines Kühlabschnittes KA geändert werden, wenn die Kühlung 7 nicht ausreichend ist. Es kann auch ein weiterer Kühlabschnitt KA hinzugefügt werden, wenn festgestellt wird, dass ein bestimmter Teil des Stators 2 thermisch problematisch ist. Es kann sich durch die Simulation aber auch herausstellen, dass ein vorgesehener Kühlabschnitt KA überflüssig ist und die Kühlung 7 des Kühlabschnittes KA entfernt oder verkleinert werden kann.

Nicht zuletzt könnte in der Transporteinrichtungskonfiguration auch ein Bewegungsparameter einer Transporteinheit Tn geändert werden. Beispielsweise könnte eine zulässige Geschwindigkeit in einer Kurve mit einem bestimmten Kurvenradius verkleinert werden oder eine zulässige Höchstgeschwindigkeit oder zulässigen Beschleunigung einer Transporteinheit Tn könnte verringert werden. Durch Veränderung eines Bewegungsparameters kann insbesondere der thermische Zustand beeinflusst werden. Beispielsweise bedingen niedrigere zulässige Beschleunigungen niedrigere elektrische Stellgrößen, damit weniger Verluste in den Antriebsspulen AS und weniger Erwärmung, damit weniger Leistungsbedarf und auch niedrigere auf eine Transporteinheit Tn wirkende Kräfte und Momente und auch niedrigere elektrische Ströme in der Leistungselektronik.

Es können natürlich auch mehrere der oben erwähnten Änderungen der Transporteinrichtungskonfiguration vorgenommen werden.

Wie die Transporteinrichtungskonfiguration Tk verändert wird, kann dem Fachmann überlassen werden. Es kann aber auch vorgesehen sein, dass die Überprüfungssoftware auf Basis der festgestellten Probleme Empfehlungen für eine Änderung macht oder anhand von vorgesehenen Algorithmen oder Regeln selbsttätig Änderungen an der Transporteinrichtungskonfiguration TK vornimmt.

Die Inbetriebnahme einer Transporteinrichtung 1 könnte demnach ablaufen wie nachfolgend mit Bezugnahme auf die Fig.2 erläutert.

Zu Beginn können optional die Beschreibungen der Bewegungen BB_{|Tn} der an der Umsetzung eines vorgegebenen Produktflusses P beteiligten Transporteinheiten Tn ermittelt werden. Hierfür können durch Simulation die Bewegungsprofile BP_{|Tn} der beteiligten Transporteinheiten Tn zur Umsetzung des Produktflusses P ermittelt werden. Ebenso können zur Umsetzung des Produktflusses P für jeden Zeitschritt der Regelung die elektrischen Stellgrößen SG_{|An} der Antriebsspulen AS des Langstatorlinearmotors 1 ermittelt werden. Das kann auf einer geeigneten Simulationseinheit 10, wie beispielsweise einer Computerhardware mit geeigneter Simulationssoftware durchgeführt werden. Hierfür können auch die Vorgaben einer Transporteinrichtungskonfiguration TK, beispielsweise für die Geometrie der Transporteinrichtung 1 verwendet werden. Alternativ sind die Beschreibungen der Bewegungen BB_{|Tn} der Transporteinheiten Tn bekannt oder werden vorgegeben.

Mit den Beschreibungen der Bewegungen BB_{|Tn} der Transporteinheiten Tn, die in Form des zeitlichen Verlaufs (üblicherweise diskretisiert im Zeitschritt der Regelung) der elektrischen Stellgrößen SG_{|An} der Antriebsspulen AS des Langstatorlinearmotors oder in Form des zeitlichen Verlaufs der Bewegungssollgrößen (üblicherweise diskretisiert im Zeitschritt der Regelung) oder in Form der Bewegungsprofile BP_{|Tn} (üblicherweise diskretisiert im Zeitschritt der Regelung) vorliegen kann, wird die thermische Auslegung TA der Transporteinrichtung 1 wie oben erläutert in einer Überprüfungseinheit 11 überprüft. Falls erforderlich werden dabei in der Überprüfungseinheit 11 zu jeden Zeitschritt der Überprüfung auch die elektrischen Stellgrößen SG_{|An} der Antriebsspulen AS des Langstatorlinearmotors zur Umsetzung des Produktflusses P ermittelt, falls diese in den Beschreibungen der Bewegungen BB_{|Tn} der Transporteinheiten Tn nicht enthalten sind. Zur Überprüfung wird auch die aktuelle Transporteinrichtungskonfiguration TK herangezogen. Zur Überprüfung der der thermischen Auslegung TA der Transporteinrichtung 1 wird für jeden Zeitschritt der Überprüfung für zumindest einen Teil der Transporteinrichtung 1 ein thermischer Zustand ermittelt und geprüft, ob der thermische Zustand durch die aktuelle Transporteinrichtungskonfiguration TK umsetzbar ist. Wird bei der Überprüfung ein Problem im Betrieb der Transporteinrichtung 1 festgestellt, wird die Transporteinrichtungskonfiguration TK wie oben erläutert geändert (Pfad "y") und die Überprüfung kann bedarfsweise wiederholt werden. Falls kein Problem festgestellt werden kann (Pfad "n"), was durch die logische "UND" Verknüpfung (Symbol "&" in Fig.2) angedeutet wird, dann kann die Transporteinrichtung 1 mit der aktuellen Transporteinrichtungskonfiguration Tk zur Umsetzung des Produktflusses P betrieben werden. Die Überprüfung erfolgt auf einer Überprüfungseinheit 11, beispielsweise eine Computerhardware mit geeigneter Überprüfungssoftware, wobei die Simulationseinheit 10 und die Überprüfungseinheit 11 auch in einer Computereinheit integriert sein können. Bei Wiederholung der Überprüfung könnten auch die Beschreibungen der Bewegungen BB_{|Tn} der Transporteinheiten Tn neu ermittelt oder neu vorgegeben werden.

Die Transporteinrichtungskonfiguration kann zusätzlich auch eine elektrische Konfiguration die des Langstatorlinearmotors umfassen, also wie, mit welchen Komponenten und/oder mit welchen Einschränkungen die Transporteinrichtung 1 elektrisch aufgebaut ist. Die elektrische Konfiguration des Langstatorlinearmotors umfasst beispielsweise die elektrische Versorgung der Antriebsspulen AS des Stators 2 und/oder eine Konfiguration einer Leistungselektronik zur elektrischen Versorgung der Antriebsspulen AS.

Die Konfiguration einer Leistungselektronik kann beispielsweise zulässige elektrische Leistungswerte bestimmter Bauteile oder Komponenten der Leistungselektronik umfassen, beispielsweise maximale zulässige elektrische Ströme, die über bestimmte Bauteile oder Komponenten fließen.

Für die Inbetriebnahme der Transporteinrichtung 1 kann zusätzlich anhand der Beschreibung der Bewegungen der Transporteinheiten Tn die elektrische Auslegung (z.B. elektrische Versorgung der Antriebsspulen und/oder die Auslegung der Leistungselektronik) überprüft werden, wie in Fig.2 dargestellt. Das bedeutet, dass ein elektrischer Zustand zumindest eines Teils der Transporteinrichtung ermittelt wird und kontrolliert wird, ob der ermittelte elektrische Zustand durch die elektrische Konfiguration der Transporteinrichtungskonfiguration TK umsetzbar ist. Diese Überprüfung erfolgt auf Basis der Beschreibung der Bewegungen der Transporteinheiten Tn in einer Überprüfungseinheit 11, in der Regel anhand von geeigneter Software und/oder vorhandenen Modellen verschiedener Teile der Transporteinrichtung 1.

Für die Überprüfung der elektrischen Auslegung kann aus den elektrischen Stellgrößen für jede der Antriebsspulen AS in jeden Zeitschritt der Überprüfung der elektrische Zustand zumindest eines Teiles der Transporteinrichtung 1 ermittelt werden. Als elektrischer Zustand kann beispielsweise die für den Betrieb benötigte elektrische Leistung ermittelt werden. Damit kann für jeden Versorgungsabschnitt VAi in jedem Zeitschritt der Überprüfung ermittelt werden, ob die von der zugeordneten Einspeisequelle EQi bereitstellbare Leistung Pₘₐₓᵢ gemäß der Transporteinrichtungskonfiguration ausreichend ist. Dabei können auch elektrische Verluste berücksichtigt werden, wie beispielsweise ein Spannungsabfall über eine Verbindungsleitung zur Verbindung einer Einspeisequelle EQi mit einem Versorgungsabschnitt VAi.

In der Überprüfung der elektrischen Auslegung können auch in jedem Zeitschritt der Überprüfung bestimmte elektrische Größen der Leistungselektronik als elektrischer Zustand ermittelt werden, beispielsweise ein über einen bestimmten Bauteil (wie z.B. ein Halbleiterschalter) oder ein durch eine bestimmte Komponente (wie z.B. ein Strombalancer) fließender elektrischer Strom. Das kann durch ein geeignetes mathematisches Modell der Leistungselektronik erfolgen. Damit kann auch überprüft werden, ob die Konfiguration der Leistungselektronik in der Transporteinrichtungskonfiguration (beispielsweise in Form der verbauten elektrischen Bauteile und Schaltkreise) ausreicht, um die Bewegungen der Transporteinheiten Tn zu realisieren. Das mathematische Modell kann beispielsweise die elektrischen Stellgrößen als Eingang verarbeiten und sich dabei einstellende interessierende elektrische Größen an bestimmten Stellen der Leistungselektronik ermitteln.

Die Überprüfung der elektrischen Auslegung kann auch die Prüfung umfassen, ob eine vorgesehene Rechenkapazität, beispielsweise der Regelungseinheit 4, für den Betrieb der Transporteinrichtung 1 zur Umsetzung des Produktflusses ausreichend ist.

Wird durch die Simulation ein Problem in der der elektrischen Auslegung festgestellt, wird die Transporteinrichtungskonfiguration TK geändert. Danach kann die Überprüfung bedarfsweise wiederholt werden, bis keine Probleme mehr auftreten.

In der Transporteinrichtungskonfiguration TK kann die elektrische Versorgung geändert werden. Beispielsweise kann eine größere Einspeisequelle EQi vorgesehen werden, oder ein Versorgungsabschnitt VAi könnte verkleinert werden, oder die Zuordnung der Versorgungsabschnitte VAi zu den Einspeisequellen EQi könnte geändert werden. Beispielsweise könnte ein Statormodul Sm aus einem Versorgungsabschnitt VAi in einen anderen verschoben werden. Es kann durch die Simulation aber auch festgestellt werden, dass man mit weniger Einspeisequellen EQi das Auslangen findet. Auch eine Veränderung der Verkabelung kann vorgenommen werden.

Es kann auch die Konfiguration einer Leistungselektronik verändert werden, beispielsweise durch die Wahl größerer oder leistungsfähigerer elektrischer Bauteile, wenn sich herausstellt, dass die Bewegungen der Transporteinheiten Tn mit der angedachten Leistungselektronik nicht umsetzbar ist. Ebenso könnte die Rechenkapazität einer Regelungseinheit 4 erhöht werden, oder einer Regelungseinheit 4 weniger Antriebsspulen AS zur Regelung zugeordnet werden.

Die Transporteinrichtungskonfiguration TK kann zusätzlich auch eine mechanische Konfiguration des Langstatorlinearmotors umfassen, wie in Fig.2 dargestellt. Die mechanische Konfiguration umfasst beispielsweise die Geometrie der Transporteinrichtung 1 im Raum, oder konkreter die Geometrie des Stators 2 und/oder der Transporteinheiten Tn, gegebenenfalls auch der Produktaufnahmen an den Transporteinheiten Tn, und/oder eine Kraftvorgabe (was auch eine Momentenvorgabe umfassen kann) von zulässigen auf die Transporteinheit Tn wirkenden Kräften (was auch Momente umfassen kann) und/oder zulässige Bewegungsparameter der Transporteinheiten Tn.

Zur Inbetriebnahme einer Transporteinrichtung 1 in Form eines (linearen oder planaren) Langstatorlinearmotors kann anhand der Beschreibung der Bewegungen der Transporteinheiten Tn zusätzlich auch die mechanische Auslegung MA (z.B. wirkende Kräfte und Momente) überprüft werden, wie in Fig.2 dargestellt. Das bedeutet, dass auch ein mechanischer Zustand zumindest eines Teils der Transporteinrichtung ermittelt wird und kontrolliert wird, der ermittelte mechanische Zustand durch die mechanische Konfiguration der Transporteinrichtungskonfiguration TK umsetzbar ist. Diese Überprüfung erfolgt auf Basis der Beschreibung der Bewegungen der Transporteinheiten Tn in einer Überprüfungseinheit 11, in der Regel anhand von geeigneter Software und/oder vorhandenen Modellen verschiedener Teile der Transporteinrichtung 1.

Für die Überprüfung der mechanischen Auslegung MA können aus dem Bewegungsprofil jeder Transporteinheit Tn und der bekannten Geometrie des Transportpfades, sowie der bekannten Masse der Transporteinheit Tn und des beförderten Produktes (falls vorhanden) und der bekannten Geometrie der Transporteinheit Tn (Geometrie der Führungseinrichtungen, der Produktaufnahme usw.) für jeden Zeitschritt der Überprüfung die durch die Bewegung entstehenden, auf die Transporteinheit Tn wirkenden Bewegungskräfte (was auch Momente umfassen kann) als mechanischer Zustand ermittelt werden. Das kann auch externe Kräfte, wie wirkende Reibungskräfte, Prozesskräfte, Führungskräfte, Haltekräfte, Anziehungskräfte, Fliehkräfte usw., umfassen. Die auf die Transporteinheit Tn wirkenden Antriebskräfte aufgrund des Antriebsmagnetfeldes lassen sich aus den elektrischen Stellgrößen ermitteln, oder können indirekt über die Beschleunigungen der Transporteinheit Tn bestimmt werden, falls die Istgrößen bekannt sind. Ebenso ist aus der bekannten Konstruktion der Transporteinrichtung 1 die wirkende Anziehungskraft zwischen den Antriebsmagneten an der Transporteinheit Tn und Bauteilen des Stators 2 bekannt. Damit kann beispielsweise überprüft werden, ob die Transporteinheit Tn zu jedem Zeitschritt der Überprüfung an der Transporteinrichtung 1 gehalten werden kann, beispielsweise durch wirkende Haltekräfte aufgrund der vorgesehenen mechanischen Führung oder aufgrund der wirkenden magnetischen Anziehungskraft zwischen den Antriebsmagneten an der Transporteinheit Tn und Bauteilen des Stators 2 oder aufgrund von erzeugten Antriebskräften (beispielsweise quer zur Bewegungsrichtung eines linearen Langstatorlinearmotors), die die Transporteinheit Tn am Stator halten. Nachdem die Führungskonstruktion am Stator 2 und an der Transporteinheit Tn bekannt ist, ist auch bekannt welche Kräfte von dieser aufgenommen werden können (Haltekräfte). Es kann auch überprüft werden, ob die möglichen Antriebskräfte ausreichen, um die Bewegung der Transporteinheiten Tn trotz einwirkender Prozesskräfte sicherzustellen.

Im Wesentlichen wird bei Überprüfung der mechanischen Auslegung MA somit überprüft, ob eine vorgesehene Bewegung einer Transporteinheit Tn aufgrund der Summe aller dabei auf die Transporteinheit Tn wirkenden Kräfte (was auch Momente umfassen kann) realisierbar ist, oder ob eine Kraftvorgabe (was auch eine Momentenvorgabe umfasst) als Teil der mechanischen Konfiguration der Transporteinrichtungskonfiguration verletzt wird. Eine Kraftvorgabe kann beispielsweise eine zulässige Kraft in einer bestimmten Richtung im Raum sein, die nicht überschritten werden darf.

Wird durch die Simulation ein Problem in der mechanischen Auslegung MA festgestellt, wird die Transporteinrichtungskonfiguration TK geändert. Danach kann die Überprüfung bedarfsweise wiederholt werden, bis keine Probleme mehr auftreten.

Durch die Änderung der Geometrie könnte man jedenfalls die mechanische Auslegung MA beeinflussen, um an bestimmten Stellen des Transportpfades die wirkenden Kräfte zu verändern, z.B. zu verringern, beispielsweise durch größere Kurvenradien, oder durch die Verlegung eines Produktschwerpunktes an der Transporteinheit Tn. Durch Veränderung eines Bewegungsparameters kann insbesondere auch der mechanische Zustand beeinflusst werden.

## Patentansprüche

1. Verfahren zur Inbetriebnahme einer Transporteinrichtung (1) in Form eines Langstatorlinearmotors mit einer Vielzahl von Antriebsspulen (AS), die an einem Stator (2) angeordnet sind, und einer Vielzahl von Transporteinheiten (Tn), die im Betrieb gleichzeitig entlang des Stators (2) bewegt werden, wobei eine Transporteinheit (Tn) zum Befördern eines Produktes dient und mit der Transporteinrichtung (1) ein vorgegebener Produktfluss (P) realisiert wird, indem anhand von vorgegebenen Regeln für die Bewegungen der Transporteinheiten (Tn) während des Betriebs der Transporteinrichtung (1) Bewegungsprofile (BP_{|Tn}) der Bewegungen der Transporteinheiten (Tn) entlang des Stators (2) zur Realisierung des Produktflusses erstellt werden, **gekennzeichnet durch die folgenden Schritte**
a) Vorgabe einer Anfangs Transporteinrichtungskonfiguration (TK) der Transporteinrichtung (1), mit einer vorgegebenen thermischen Konfiguration der Transporteinrichtung (1),
b) Vorgabe einer Beschreibung der Bewegungen (BB_{|Tn}) der Transporteinheiten (Tn) zur Umsetzung des Produktflusses mit der Transporteinrichtung, wobei die Beschreibung der Bewegungen (BB_{|Tn}) der Transporteinheiten (Tn) einen zeitlichen Verlauf der elektrischen Stellgrößen der Antriebsspulen (AS) umfassen oder aus der Beschreibung der Bewegungen (BB_{|Tn}) der Transporteinheiten (Tn) ein zeitlicher Verlauf der elektrischen Stellgrößen der Antriebsspulen (AS) ermittelt wird,
c) Verwendung des zeitlichen Verlaufs der elektrischen Stellgrößen der Antriebsspulen (AS) in einer Überprüfungseinheit (11) zur Ermittlung eines thermischen Zustandes zumindest eines Teils der Transporteinrichtung (1) und Überprüfung, ob der thermische Zustand dieses zumindest einen Teils der Transporteinrichtung (1) durch die aktuelle thermische Konfiguration umsetzbar ist,
d) Änderung zumindest einer der in der Transporteinrichtungskonfiguration (TK) vorgesehenen thermischen Konfiguration, wenn der thermische Zustand aufgrund der vorgegebenen Transporteinrichtungskonfiguration (TK) nicht umsetzbar ist und
e) Durchführen des Betriebs der Transporteinrichtung (Tn) mit der zuletzt vorliegenden Transporteinrichtungskonfiguration (TK).

2. Verfahren nach Anspruch 1, **dadurch gekennzeichnet, dass** der zeitliche Verlauf der elektrischen Stellgrößen der Antriebsspulen (AS) vorgegeben wird, indem die Bewegungen der Transporteinheiten (Tn) zur Realisierung des Produktflusses (P) simuliert werden und dabei die zur Umsetzung der Bewegungen benötigten elektrischen Stellgrößen der Antriebsspulen (AS) ermittelt werden.

3. Verfahren nach Anspruch 1 oder 2, **dadurch gekennzeichnet, dass** zumindest die Schritte c) und d) wiederholt werden, bis der Produktfluss (P) mit der aktuellen Transporteinrichtungskonfiguration (TK) umsetzbar ist.

4. Verfahren nach Anspruch 3, **dadurch gekennzeichnet, dass** auch der Schritt b) wiederholt wird.

5. Verfahren nach einem der Ansprüche 1 bis 4, **dadurch gekennzeichnet, dass** die thermische Konfiguration eine Vorgabe für eine Kühlung (7) des Stators (2) umfasst und zur Überprüfung der thermischen Konfiguration eine Erwärmung zumindest eines Teils des Stators (2) oder zumindest einer Antriebsspule (AS) aufgrund des vorgegebenen zeitlichen Verlaufs der elektrischen Stellgrößen der Antriebsspulen (AS) dieses Teils des Stators (2) oder der zumindest einen Antriebsspule (AS) ermittelt wird und überprüft wird, ob die in der thermischen Konfiguration vorgesehene Kühlung (7) des Stators (2) ausreichend ist, um die Erwärmung dieses Teils des Stators (2) oder der zumindest einen Antriebsspule (AS) unterhalb einer zulässigen Erwärmung zu halten.

## Claims

1. Method for starting-up a transport device (1) in the form of a long-stator linear motor having a plurality of drive coils (AS) which are arranged on a stator (2) and a plurality of transport units (Tn) which are moved simultaneously along the stator (2) during operation, a transport unit (Tn) being used to convey a product, and a specified product flow (P) being produced by the transport device (1) by creating, using specified rules for the movements of the transport units (Tn) during the operation of the transport device (1), movement profiles (BP_{|Tn}) of the movements of the transport units (Tn) along the stator (2) for producing the product flow, **characterized by the following steps:**
a) specifying an initial transport device configuration (TK) of the transport device (1), having a specified thermal configuration of the transport device (1);
b) specifying a description of the movements (BB_{|Tn}) of the transport units (Tn) for implementing the product flow by means of the transport device, the description of the movements (BB_{|Tn}) of the transport units (Tn) including a time course of the electrical control variables of the drive coils (AS), or a time course of the electrical control variables of the drive coils (AS) being determined from the description of the movements (BB_{|Tn}) of the transport units (Tn);
c) using the time course of the electrical control variables of the drive coils (AS) in a checking unit (11) in order to determine a thermal state of at least one part of the transport device (1) and to check whether the thermal state of this at least one part of the transport device (1) can be implemented by the current thermal configuration;
d) changing the thermal configuration provided in the transport device configuration (TK) if the thermal state cannot be implemented due to the specified transport device configuration (TK); and
e) carrying out the operation of the transport device (Tn) with the last available transport device configuration (TK).

2. Method according to claim 1, **characterized in that** the time course of the electrical control variables of the drive coils (AS) is specified by simulating the movements of the transport units (Tn) for producing the product flow (P) and, in the process, determining the electrical control variables of the drive coils (AS) required to implement the movements.

3. Method according to either claim 1 or claim 2, **characterized in that** at least steps c) and d) are repeated until the product flow (P) can be implemented with the current transport device configuration (TK).

4. Method according to claim 3, **characterized in that** step b) is also repeated.

5. Method according to any of the claims 1 to 4, **characterized in that** the thermal configuration includes a specification for a cooling (7) of the stator (2) and, in order to check the thermal configuration, heating of at least one part of the stator (2) or of at least one drive coil (AS) is determined on the basis of the specified time course of the electrical control variables of the drive coils (AS) of this part of the stator (2) or of the at least one drive coil (AS), and it is checked whether the cooling (7) of the stator (2) provided in the thermal configuration is sufficient to keep the heating of this part of the stator (2) or of the at least one drive coil (AS) below a permissible level of heating.

## Revendications

1. Procédé pour la mise en service d'un dispositif de transport (1) se présentant sous la forme d'un moteur linéaire à stator long comprenant une pluralité de bobines d'entraînement (AS) qui sont agencées sur un stator (2), et une pluralité d'unités de transport (Tn) qui sont déplacées simultanément le long du stator (2) pendant le fonctionnement, une unité de transport (Tn) servant à transporter un produit, et un flux de produit (P) prédéfini étant réalisé au moyen du dispositif de transport (1), en créant, à l'aide de règles prédéfinies pour les mouvement des unités des transport (Tn) pendant le fonctionnement du dispositif de transport, des profils de mouvement (BP_{|Tn}) des unités de transport (Tn) le long du stator (2) afin de réaliser le flux de produit, **caractérisé par** les étapes suivantes
a) spécification d'une configuration initiale (TK) du dispositif de transport (1), comprenant une configuration thermique prédéfinie du dispositif de transport (1),
b) spécification d'une description des mouvements (BB_{|Tn}) des unités de transport (Tn) pour la mise en œuvre du flux de produits avec le dispositif de transport, la description des mouvements (BB_{|Tn}) des unités de transport (Tn) comprenant une évolution dans le temps des grandeurs de réglage électriques des bobines d'entraînement (AS), ou une évolution dans le temps des grandeurs de réglage électriques des bobines d'entraînement (AS) étant déterminée à partir de la description des mouvements (BB_{|Tn}) des unités de transport (Tn),
c) utilisation de l'évolution dans le temps des grandeurs de réglage électriques des bobines d'entraînement (AS) dans une unité de contrôle (11) pour déterminer un état thermique d'au moins une partie du dispositif de transport (1) et pour vérifier, si l'état thermique de cette au moins une partie du dispositif de transport (1) peut être mis en œuvre par la configuration thermique actuelle,
d) modification d'au moins une configuration thermique prévue dans la configuration (TK) du dispositif de transport, si l'état thermique ne peut être mis en œuvre en raison de la configuration prédéfinie du dispositif de transport (TK) et
e) réalisation du fonctionnement du dispositif de transport (Tn) avec la dernière configuration disponible (TK) du dispositif de transport.

2. Procédé selon la revendication 1, **caractérisé en ce que** l'évolution temporelle des grandeurs de réglage électriques des bobines d'entraînement (AS) est prédéfinie en simulant les mouvements des unités de transport (Tn) pour la mise en œuvre du flux de produit (P) et en déterminant les grandeurs de réglage électriques des bobines d'entraînement (AS) nécessaires à la mise en œuvre de ces mouvements.

3. Procédé selon la revendication 1 ou la revendication 2, **caractérisé en ce qu'**au moins les étapes c) et d) sont répétées jusqu'à ce que le flux de produit (P) puisse être mis en œuvre avec la configuration actuelle (TK) du dispositif de transport.

4. Procédé selon la revendication 3, **caractérisé en ce que** l'étape b) est également répétée.

5. Procédé selon l'une des revendications 1 à 4, **caractérisé en ce que** la configuration thermique comprend une spécification pour un refroidissement (7) du stator (2) et, pour vérifier la configuration thermique, un réchauffement d'au moins une partie du stator (2) ou d'au moins une bobine d'entraînement (AS) est déterminé sur la base de l'évolution temporelle spécifiée des grandeurs de réglage électriques des bobines d'entraînement (AS) de cette partie du stator (2) ou de ladite au moins une bobine d'entraînement (AS) et pour vérifier si le refroidissement (7) du stator (2) prévu dans la configuration thermique est suffisant pour maintenir le réchauffement de cette partie du stator (2) ou de ladite au moins une bobine d'entraînement (AS) en dessous d'un réchauffement admissible.
